# EUROPEAN PATENT SPECIFICATION

(11) **EP 3 214 766 B1**
(45) Date of publication and mention of the grant of the patent: **19.06.2019**
(21) Application number: 15855638.1
(22) Date of filing: 29.09.2015
(51) Int. Cl.: H04B 1/08, H01M 2/10, H04B 1/3888

(54) **ELECTRIC DEVICE**
ELEKTRISCHE VORRICHTUNG
DISPOSITIF ÉLECTRIQUE

(30) Priority: 30.10.2014 JP 2014221159
(43) Date of publication of application: 06.09.2017
(73) Proprietor: Koki Holdings Co., Ltd., Minato-ku Tokyo 1086020 (JP)
(72) Inventor: KAWAMATA, Takashi, Hitachinaka-City Ibaraki 312-8502 (JP); FUJISAWA, Haruhisa, Hitachinaka-City Ibaraki 312-8502 (JP)
(74) Representative: Meissner Bolte Partnerschaft mbB
(86) International application number: PCT/JP2015/077478
(87) International publication number: WO 2016/067807

(56) References cited:
- DE-U1-202014 101 611
- DE-U1-202014 102 695
- JP-A- H0 635 569
- JP-A- S6 288 255
- JP-A- H06 302 170
- JP-A- H06 302 170
- JP-A- H10 132 827
- JP-A- H11 250 941
- JP-A- 2000 071 476
- JP-A- 2006 044 230
- JP-A- 2006 103 859
- JP-A- 2007 015 032
- JP-A- 2009 024 854
- JP-A- 2009 166 509
- HITACHI CORDLESS RADIO UR18DSDL TORIATSUKAI SETSUMEISHO, [Online] 21 January 2015, pages 10 - 11, XP009502710 Retrieved from the Internet: <URL:HTTP://WWW.HITACHI-KOKI.CO.JP/MANUAL_V IEW_DOMESTIC/PDF/C99712802_UR18DSDL_411.PDF >

## Description

### [Technical Field]

The present invention relates to an electric device, and particularly to an electric device configured to be driven by an adapter and a battery.

### [Background Art]

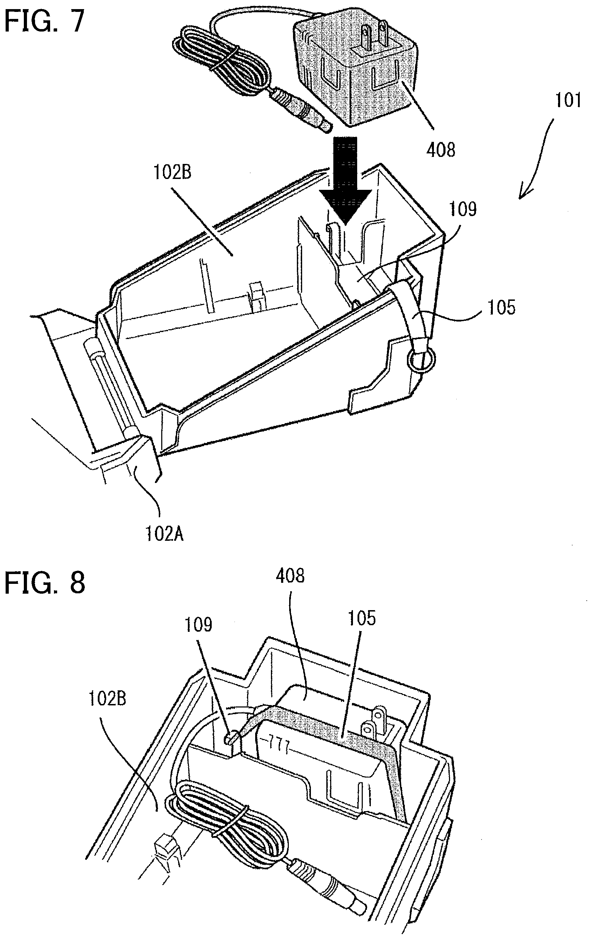

As shown in Figs. 7 and 8, a conventional portable radio 101 includes a housing body 102A, and a cover 102B that can open and close relative to the housing body 102A. A battery compartment 109 is formed in a distal end portion of the cover 102B. The battery compartment 109 can accommodate an adapter 408. The adapter 408 is restrained in the battery compartment 109 with a restraining band 105. The portable radio 101 operates on power supplied from a battery or the adapter 408 (Patent Literature 1).

### [Citation List]

### [Patent Literature]

[PTL 1] Japanese Patent Application Publication No. 2010-206242

DE202014102695U discloses an electric device including a device body and a frame guard. The device body has a plurality of surfaces for defining a three-dimensional configuration.

### [Summary of Invention]

### [Technical Problem]

In the conventional portable radio 101 described above, the cover 102B is pivoted to open and close the housing body 102A, but the operation for opening and closing the cover 102B relative to the housing body 102A is impeded by the adapter 408 disposed in the cover 102B. That is, the weight of the adapter 408 added to the cover 102B makes the opening and closing operation more difficult, particularly because the battery compartment 109 that accommodates the adapter 408 is formed in the distal end portion of the cover 102B. There is also potential for the adapter 408 to cause damage to other components in the portable radio 101 if the adapter 408 were to slip out of the restraining band 105 and come out of the battery compartment 109.

Further, since the battery is mounted in and removed from the cover 102B in the vertical direction in the portable radio of Patent Document 1, the cover 102B must open both a top surface and a side surface of the portable radio. Similarly, since the adapter 408 is mounted and removed in a direction orthogonal to the cover 102B, the cover 102B must open both the top surface and side surface of the portable radio. These requirements lead to a larger cover 102B and make opening and closing operations of the cover 102B more complex.

In view of the foregoing, it is an object of the present invention to provide an electric device provided with a small cover that is easy to open and close.

### [Solution to Problem]

The present invention is defined by the features of the appended claims.

In order to attain above and other object, the present invention provides an electric device characterized by including: a housing including a device body and a cover; an adapter connector; and an output portion. The device body includes an adapter compartment and a battery compartment disposed at a different position from the adapter compartment. The adapter compartment is configured to accommodate an adapter connectable to an external power supply. The battery compartment is configured to accommodate a battery. The cover is configured to expose and close the adapter compartment and the battery compartment. The adapter connector is provided at the housing and is connectable to the adapter. The output portion is configured to be operated either by accommodating the battery in the battery compartment or by connecting the adapter to the adapter connector and the external power supply.

With this construction, since the adapter compartment is provided in the device body rather than the cover, the cover is lighter and opening and closing operations for the cover are facilitated. Further, since the device body has the adapter compartment and the battery compartment disposed at a different position from the adapter compartment, the adapter and the battery can be simultaneously accommodated in the housing. Accordingly, the adapter can be accommodated in the housing while the output portion is operated by the battery. Further, by the cover being closed, the adapter can be protected from water, dust, and the like while the battery is accommodated in the device body.

Further, preferably, the adapter compartment and the battery compartment are juxtaposed with each other.

With this construction, since the adapter compartment and battery compartment are juxtaposed with each other, the adapter does not interfere with the mounting and removal operations for the battery. Also, the battery in turn does not interfere with the mounting and removal operations for the adapter. Hence, this structure facilitates the mounting and removal of the battery and the adapter.

Further, preferably, the battery compartment is disposed above the adapter compartment.

With this construction, since the battery compartment is disposed above the adapter compartment, the adapter does not interfere with the mounting and removal operations for the battery. Accordingly, the battery can be easily mounted in and removed from the battery compartment.

Further, it is preferable that: the battery accommodated in the battery compartment is mounted and removed along a battery mounting path; and the adapter compartment is disposed at a position that does not obstruct the battery mounting path.

With this construction, since the adapter compartment is disposed at a position that does not obstruct the battery mounting path, the adapter does not interfere with the battery when the battery is mounted and removed. Accordingly, the battery can be easily mounted in and removed from the battery compartment.

Further, it is preferable that: the adapter accommodated in the adapter compartment is mounted and removed along an adapter mounting path; and the battery compartment is disposed at a position that does not obstruct the adapter mounting path.

With this construction, since the battery compartment is disposed at a position that does not obstruct the adapter mounting path, the battery does not interfere with the adapter when the adapter is mounted and removed. Accordingly, the adapter can be easily mounted in and removed from the adapter compartment.

Further, preferably, the adapter compartment is configured to accommodate a plurality of types of adapters.

With this construction, the single adapter compartment can accommodate a plurality of types of adapters.

According to another aspect of the present invention, there is provided an electric device including: a housing including an adapter compartment; a cover; and an output portion. The adapter compartment is configured to accommodate an adapter connectable to an external power supply, the adapter being configured to be mounted in and removed from the adapter compartment in an adapter mounting direction. The cover is configured to expose and close the adapter compartment. The output portion is configured to be operated by connecting the adapter to the external power supply. The electric device is characterized in that the adapter mounting direction is sloped relative to the cover when the cover is closed.

With this construction, since the adapter mounting direction slopes relative to the cover, the operator can easily mount and remove the adapter. Further, since there is no need for the housing to be open on both its top surface and side surface, the cover can be made more compact compared to a case where the adapter mounting direction is orthogonal to the cover. Thus, the structure facilitates the opening and closing operation of the cover.

According to still another aspect of the present invention, there is provided an electric device including: a housing including an adapter compartment; a cover; and an output portion. The adapter compartment is configured to accommodate an adapter connectable to an external power supply, the adapter being configured to be mounted in and removed from the adapter compartment in an adapter mounting direction. The cover is configured to expose and close the adapter compartment. The output portion is configured to be operated by connecting the adapter to the external power supply. The electric device is characterized in that the adapter mounting direction is sloped relative to a ground surface in a state where the electric device is placed on the ground surface.

With this construction, since the adapter mounting direction slopes relative to the ground surface, the operator can easily mount and remove the adapter while the elective device is placed on the ground surface. Further, compared to a case where the adapter mounting direction is orthogonal to the ground surface, since there is no need for the housing to be open on both the top surface and side surface, the cover can be made more compact, thereby facilitating the opening and closing operations for the cover.

Further, preferably, the adapter compartment includes a restricting rib configured to contact a side surface of the adapter to restrict movement of the adapter, the side surface being a surface separated farthest from an inner surface of the cover.

When carrying the electric device, the side surface of the adapter, which is separated farthest from the cover, is the most unstable. However, since the restricting rib is provided to contact the side surface, the adapter can be stably accommodated in the adapter compartment. Accordingly, this structure can prevent the adapter from moving inside the electrical device and causing damage to internal parts.

Preferably, the adapter compartment includes a restricting rib that extends in the adapter mounting direction and that is configured to guide mounting and removal of the adapter.

With this construction, since the restricting rib extends in the adapter mounting direction, the adapter can be stably mounted and removed in the adapter mounting direction. Hence, the mounting and removal of the adapter can be facilitated.

According to still another aspect of the present invention, there is provided an electric device including: a housing including a battery compartment configured to accommodate a battery therein, the battery being configured to be mounted in and removed from the battery compartment in a battery mounting direction; a cover configured to expose and close the battery compartment; and an output portion configured to be operated by accommodating the battery in the battery compartment. The electric device is characterized in that the battery mounting direction is sloped relative to the cover when the cover is closed.

With this construction, since the battery mounting direction is sloped relative to the cover, the operator can easily mount and remove the battery. Further, compared to a case where the battery mounting direction is orthogonal to the cover, since there is no need for the housing to be open on both the top surface and side surface, the cover can be made more compact. This structure can therefore facilitate the opening and closing operations for the cover.

According to still another aspect of the present invention, there is provided an electric device including: a housing including a battery compartment configured to accommodate a battery therein, the battery being configured to be mounted in and removed from the battery compartment in a battery mounting direction; a cover configured to expose and close the battery compartment; and an output portion configured to be operated by accommodating the battery in the battery compartment. The electric device is characterized in that the battery mounting direction is sloped relative to a ground surface in a state where the electric device is placed on the ground surface.

With this construction, since the battery mounting direction is sloped relative to the ground surface, the operator can easily mount and remove the battery while the electric device is placed on the ground surface. Further, compared to a case where the battery mounting direction is orthogonal to the ground surface, since there is no need for the housing to be open on both the top surface and side surface, the cover can be made more compact. The opening and closing operations for the cover can be therefore facilitated.

### [Advantageous Effects of Invention]

The electrical device according to the present invention can be provided with a compact cover whose opening and closing operations can be facilitated.

### [Brief Description of Drawings]

Fig. 1 is a front view of a portable radio according to a first embodiment of the present invention;
Fig. 2 is a perspective rear view of the portable radio according to the first embodiment of the present invention in a state where a cover thereof is open and a battery and an adapter are mounted;
Fig. 3 is an enlarged view of an area in the vicinity of an aperture of the portable radio according to the first embodiment of the present invention in a state where the cover is open but the battery and the adapter are not mounted;
Fig. 4 is a cross-sectional view of the portable radio according to the first embodiment of the present invention;
Fig. 5A is a front view and a side view of an Australian AC adapter plug that is mountable and removable from the portable radio according to the first embodiment of the present invention;
Fig. 5B is a front view and a side view of a British AC adapter plug that is mountable and removable from the portable radio according to the first embodiment of the present invention;
Fig. 5C is a front view and a side view of a European AC adapter plug that is mountable and removable from the portable radio according to the first embodiment of the present invention;
Fig. 6 is a perspective view of a portable radio according to a second embodiment of the present invention in a state where a cover is open;
Fig. 7 is a perspective view illustrating a state where an adapter is being mounted on a cover of a conventional portable radio; and
Fig. 8 is a perspective view illustrating a state where the adapter is fixed to the cover of the conventional portable radio.

### [Description of Embodiments]

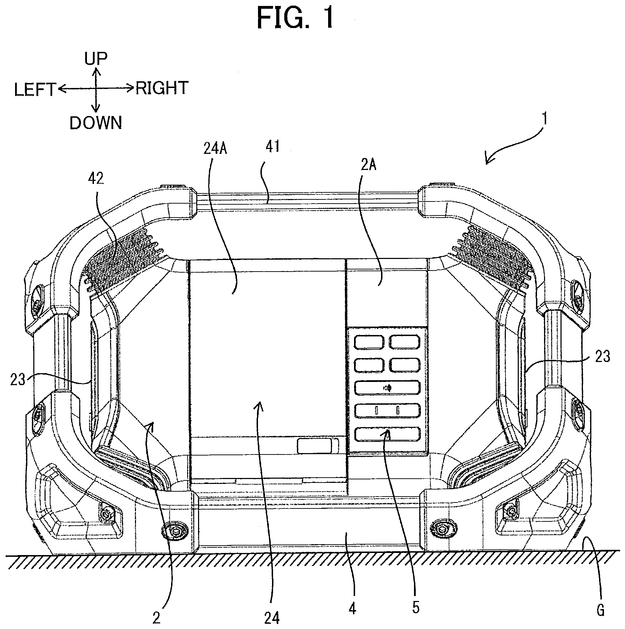

An electric device according to a first embodiment of the present invention will be described while referring to Figs. 1 through 5C.

Fig. 1 shows a portable radio 1 as an example of an electric device according to the first embodiment of the present invention. The portable radio 1 is primarily configured of a housing 2, a frame guard 4, and a manipulation portion 5. In the following description, an upper side of the portable radio 1 when the portable radio 1 is placed on a ground surface G will be defined as a top, and the opposite side of the portable radio 1 resting on the ground surface G will be defined as a bottom. The side of the portable radio 1 on which the manipulation portion 5 is provided (the near side in the drawing of Fig. 1) is defined as a front, and the opposite side (the far side in Fig. 1) is defined as a rear. Left and right sides of the portable radio 1 are defined from a perspective of a user facing the front of the portable radio 1. Positional relationships and the like referenced in the following description, including such references as parallel, orthogonal, and opposite, are not to be limited to the strict meanings of parallel, orthogonal, and opposite, but may include the meanings substantially parallel, substantially orthogonal, and substantially opposite.

As shown in Figs. 1 through 4, the housing 2 is primarily configured of a device body 2A, and a cover 2B. The device body 2A has a general triangular prism shape. The device body 2A includes a battery compartment 7, an adapter compartment 9, an adapter connector 21, an antenna 22, speakers 23, an auxiliary device compartment 24, and an engaging part 25. An opening 2a is formed in a rear surface of the device body 2A and penetrates the device body 2A in a direction sloping from the upper rear to the lower front. The battery compartment 7 is adapted to accommodate a battery 6 that is detachably mountable therein. The adapter compartment 9 is adapted to accommodate an adapter 8 that is detachably mountable therein. The adapter 8 is connectable to the adapter connector 21. The engaging part 25 is configured to engage with the cover 2B.

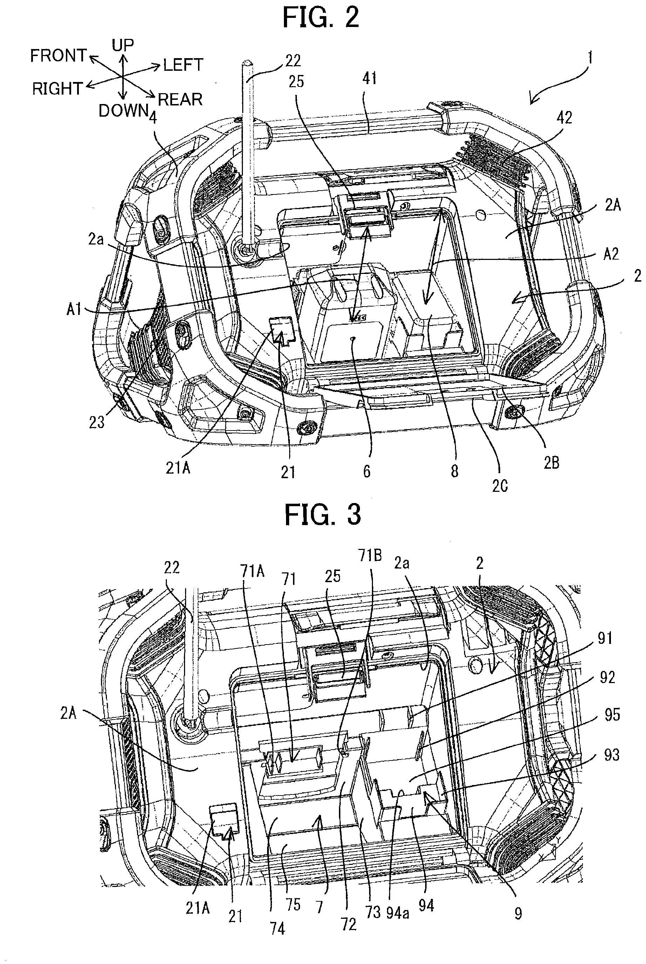

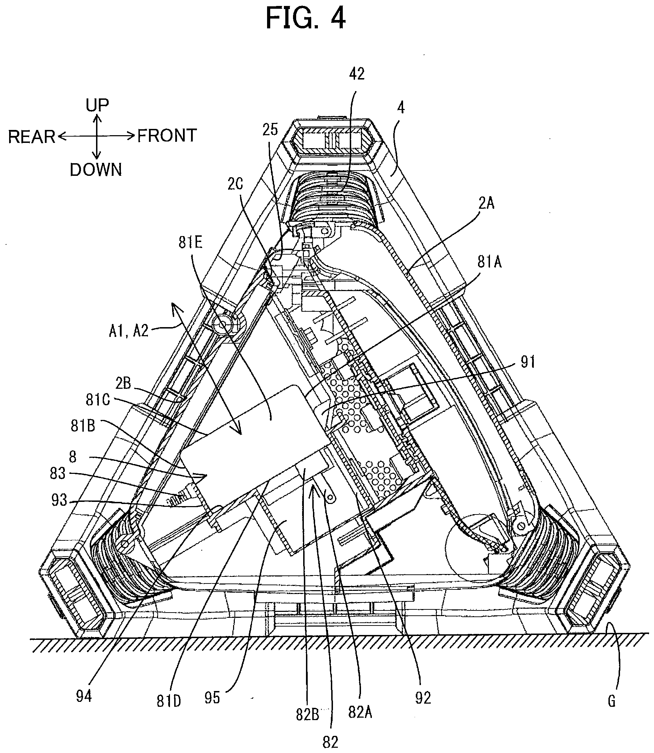

The cover 2B is capable of pivoting about its lower edge relative to the device body 2A. By pivoting, the cover 2B can open and close the opening 2a. In other words, the cover 2B can cover and expose the battery compartment 7 and adapter compartment 9. An engaged part 2C is provided on a top edge of the cover 2B in an approximate left-right center thereof. The engaged part 2C can be engaged in the engaging part 25. When the cover 2B is in its open state for exposing the opening 2a, as shown in Fig. 2, the cover 2B is in a position that does not obstruct mounting paths of the battery 6 and adapter 8 described later. When the cover 2B is in its closed state for covering the opening 2a, as shown in Fig. 4, the cover 2B is substantially flush with the rear surface of the device body 2A.

The battery 6 can be mounted in and used with power tools. The battery 6 includes battery terminals (not shown), and battery engagement portions (not shown) capable of engaging with the battery compartment 7.

The battery 6 is mounted in and removed from the battery compartment 7 in a battery mounting direction A1 shown in Figs. 2 and 4. As shown in Fig. 4, the battery mounting direction A1 is sloped relative to the ground surface G when the portable radio 1 is placed on the ground surface G. The battery mounting direction A1 is also sloped relative to an inner surface of the cover 2B. More specifically, the battery mounting direction A1 is a direction connecting the upper rear and lower front in a side view. Note that one direction sloping relative to another direction in the present invention signifies that the two directions intersect but are not orthogonal to each other.

As shown in Figs. 2 and 3, the battery compartment 7 is provided in a rear section of the portable radio 1 and is exposed to the outside of the portable radio 1 through the opening 2a. The battery compartment 7 includes a terminal section 71, a front wall 72, a pair of side walls 73, a bottom wall 74, and a cord compartment 75. The battery compartment 7 is formed as a depression that is recessed in a direction downward toward the front in a side view. The battery 6 is accommodated in a space defined by the front wall 72, side walls 73, and bottom wall 74. When the battery 6 is accommodated in the battery compartment 7, in a side view, an angle between a direction orthogonal to the battery mounting direction A1 and the ground surface G is smaller than an angle between the cover 2B and the ground surface G. The battery compartment 7 is disposed at a position that does not obstruct a path of the adapter 8 along which the adapter 8 is mounted in and removed from the adapter compartment 9.

The terminal section 71 is provided at the front wall 72. The terminal section 71 includes a plurality of terminals 71A, and battery engaging parts 71B. The terminals 71A extend parallel to the battery mounting direction A1 and are capable of forming electrical connections with the battery terminals (not shown) of the battery 6. The battery engaging parts 71B are capable of engaging with the battery engagement portions (not shown) of the battery 6. When the battery engaging parts 71B are engaged with the battery engagement portions, the battery 6 is secured in the battery compartment 7. The path along which the battery 6 is mounted in and removed from the battery compartment 7 is an example of a battery mounting path of the present invention.

The front wall 72 extends parallel to the battery mounting direction A1 and functions to guide mounting and removal of the battery 6 in the battery mounting direction A1. More specifically, the front wall 72 extends diagonally upward and rearward in a side view.

The pair of side walls 73 opposes to be spaced apart from each other in a left-right direction. The side walls 73 are connected to respective left and right edges of the front wall 72. The side walls 73 extend parallel to the battery mounting direction A1. The side walls 73, together with the front wall 72, function to guide the mounting and removal of the battery 6. A distance separating the side walls 73 in the left-right direction is slightly greater than a left-right dimension of the battery 6. The bottom wall 74 is substantially orthogonal to the front wall 72 and connects to bottom edges of the front wall 72 and side walls 73.

The cord compartment 75 is provided in a rear section of the bottom wall 74. The cord compartment 75 is a space for accommodating a cord of the adapter 8. The cord compartment 75 can accommodate the cord of the adapter 8 in a state where the battery 6 is mounted in the battery compartment 7. Since the cord compartment 75 is provided at a position that does not obstruct the battery mounting path, the cord does not interfere with the mounting and removal of the battery 6.

The adapter 8 is mounted in and removed from the adapter compartment 9 in an adapter mounting direction A2 shown in Figs. 2 and 4. In the first embodiment, the battery 6 and adapter 8 are mounted and removed in the same direction in a side view. As shown in Fig. 4, the adapter mounting direction A2 slopes relative to the ground surface G when the portable radio 1 is resting on the ground surface G. The adapter mounting direction A2 also slopes relative to the inner surface of the cover 2B. More specifically, the adapter mounting direction A2 is a direction extending from the upper rear to the lower front in a side view.

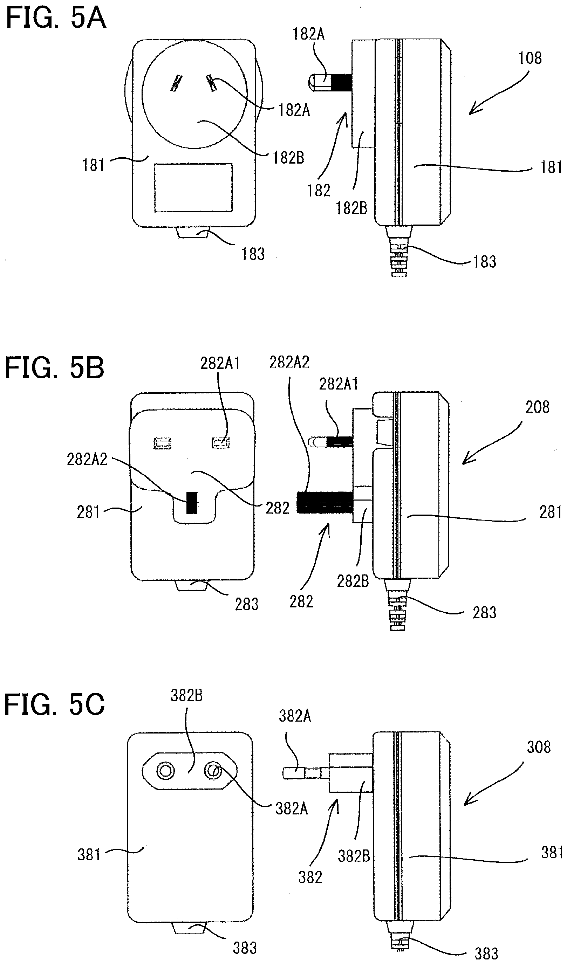

The adapter 8 includes an adapter body 81, a power supply connector 82 capable of connecting to an external power supply, and a cord 83. The adapter body 81 is defined by a top surface 81A, a bottom surface 81B, a front surface 81C, a rear surface 81D, and a pair of side surfaces 81E. The power supply connector 82 extends outward from the rear surface 81D. The power supply connector 82 includes a Japanese AC adapter plug 82A, and a base portion 82B serving as a base for the adapter plug 82A. Note that the shape of the adapter 8 of the present embodiment is not limited to the depicted shape. That is, the adapter 8 may have one of the shapes shown in Figs. 5A through 5C.

Fig. 5A shows an Australian adapter 108. The Australian adapter 108 includes an adapter body 181, a power supply connector 182 capable of connecting to an external power supply, and a cord 183. The power supply connector 182 includes Australian AC adapter plugs 182A, and a base portion 182B serving as a base for the adapter plugs 182A.

Fig. 5B shows a British adapter 208. The British adapter 208 includes an adapter body 281, a power supply connector 282 capable of connecting to an external power supply, and a cord 283. The power supply connector 282 includes British AC adapter plugs 282A1 and 282A2, and a base portion 282B serving as a base for the adapter plugs 282A1 and 282A2.

Fig. 5C shows a European adapter 308. The European adapter 308 includes an adapter body 381, a power supply connector 382 capable of connecting to an external power supply, and a cord 383. The power supply connector 382 includes European AC adapter plugs 382A, and a base portion 382B serving as a base for the adapter plugs 382A. The shapes of the adapter bodies 81, 181, 281, and 381 are substantially the same, but the shapes of the power supply connectors 82, 182, 282, and 382 are all different from each other.

The adapter compartment 9 is provided in the rear section of the portable radio 1 and is exposed on the outside of the portable radio 1 through the opening 2a. The adapter compartment 9 is provided in a position that does not obstruct the path of the battery 6 along which the battery 6 is mounted in and removed from the battery compartment 7. The adapter compartment 9 has a depressed shape that is recessed in a direction downward and forward in a side view, as shown in Fig. 4. The adapter compartment 9 can accommodate a plurality of types of adapters, such as adapters 8, 108, 208, and 308. The adapter compartment 9 is juxtaposed with the battery compartment 7 in the left-right direction. Here, the term "juxtaposed" signifies that the components are aligned with each other to be substantially at the same position vertically.

As shown in Figs. 3 and 4, the adapter compartment 9 includes a pair of top-surface restricting ribs 91, a pair of rear-surface restricting ribs 92, a pair of restricting walls 93, and a supporting surface 94. A recessed part 95 formed in the adapter compartment 9 is recessed in a direction forward and downward. The path along which the adapter 8 is mounted in and removed from the adapter compartment 9 is an example of an adapter mounting path of the invention.

The top-surface restricting ribs 91 are disposed at a top section of the adapter compartment 9 and protrude rearward from the device body 2A. The top-surface restricting ribs 91 have a general triangular shape in a side view and are spaced apart from each other in the left-right direction. Rear surfaces of the top-surface restricting ribs 91 contact the top surface 81A of the adapter 8, thereby restricting the adapter 8 from moving in a direction upward and forward. As shown in Fig. 4, the top surface 81A contacted by the top-surface restricting ribs 91 is a surface of the adapter body 81 farthest separated from the inner surface of the cover 2B. Specifically, among the top surface 81A, bottom surface 81B, and side surfaces 81E of the adapter 8, the top surface 81A that is separated farthest from the cover 2B has a greater tendency to move within the adapter compartment 9. In the present embodiment, by using the top-surface restricting ribs 91 to restrict the top surface 81A, i.e., the side most likely to move, the adapter 8 can be retained more securely in the adapter compartment 9. In a state where the adapter 8 is accommodated in the adapter compartment 9, an angle formed by a longitudinal direction of the adapter body 81 (a direction orthogonal to the adapter mounting direction A2) and the ground surface G in a side view is smaller than an angle formed by the cover 2B and the ground surface G.

The rear-surface restricting ribs 92 are positioned at left and right sides on an inner surface of the recessed part 95. The rear-surface restricting ribs 92 have a general rectangular shape in a side view. Top surfaces of the rear-surface restricting ribs 92 contact the rear surface 81D of the adapter 8 to restrict the adapter 8 from moving in a direction downward and forward. The rear-surface restricting ribs 92 protrude in a direction downward and rearward from the inner surface of the recessed part 95. Protruding lengths of the rear-surface restricting ribs 92 and a distance separating the rear-surface restricting ribs 92 in the left-right direction are set so as not to interfere with the power supply connectors 82, 182, 282, and 382. The top surfaces of the rear-surface restricting ribs 92 are flush with the supporting surface 94.

The restricting walls 93 have a general L-shape in a plan view and protrude in a direction upward and rearward from the supporting surface 94. Inner surfaces of the restricting walls 93 contact the bottom surface 81B and side surfaces 81E of the adapter 8 to restrict the adapter 8 from moving in the left-right direction and in a direction diagonally downward and rearward. The supporting surface 94 is substantially parallel to the bottom wall 74. A depression 94a is formed in the supporting surface 94. The depression 94a is depressed in a direction downward and rearward. The depression 94a is depressed a distance sufficient for accommodating a portion of the base portion 282B that protrudes downward. The top-surface restricting ribs 91, rear-surface restricting ribs 92, and restricting walls 93 are an example of a restricting rib of the invention.

The recessed part 95 is recessed in a direction downward and forward from the supporting surface 94. The recessed part 95 has a sufficient depth for accommodating each of the adapter plugs 82A, 182A, 282A1, 282A2, and 382A. As shown in Fig. 4, a length of the recessed part 95 from the upper front side to the lower rear side is sufficiently long to accommodate each of the base portions 82B, 182B, 282B, and 382B.

As shown in Figs. 2 and 3, the adapter connector 21 is disposed adjacent to and rightward of the opening 2a. The adapter connector 21 can connect with a free end of the cord 83. A covering part 21A is provided in the adapter connector 21. The covering part 21A covers a terminal in the adapter connector 21 that connects to the free end of the cord 83.

The antenna 22 is connected to the device body 2A via a universal joint that allows an operator to extend the antenna 22 in a desired direction for best receiving radio waves.

The speakers 23 are provided on left and right endfaces of the device body 2A. The speakers 23 are an example of an output portion of the invention.

The auxiliary device compartment 24 is covered by a transparent cover 24A and can connect to various types of music playback devices inserted therein. By connecting a music playback device to the auxiliary device compartment 24 and manipulating the manipulation portion 5, the operator can play music from the speakers 23.

The frame guard 4 is arranged so as to surround a periphery of the housing 2. In other words, the housing 2 is disposed inside the frame guard 4. The frame guard 4 serves to protect the portable radio 1 from external impacts. A handle part 41 is provided on the frame guard 4. The operator grips the handle part 41 when carrying the portable radio 1. Cushioning parts 42 are provided in areas at which the frame guard 4 connects to the housing 2. When the frame guard 4 incurs an impact, the cushioning parts 42 reduce the magnitude of impact transferred to the housing 2.

The manipulation portion 5 is disposed on a front surface of the device body 2A. The manipulation portion 5 includes a plurality of operating buttons for tuning, adjusting volume, and starting and stopping playback.

When the operator wishes to operate the portable radio 1 cordlessly, the operator opens the cover 2B and inserts the battery 6 into the battery compartment 7 in the battery mounting direction A1. In this way, the battery 6 can supply power to the portable radio 1. At this time, the adapter 8 is accommodated in the adapter compartment 9 with the cord 83 accommodated in the cord compartment 75. Thus, the adapter 8 can be stored inside the portable radio 1 when the battery 6 is mounted in the battery compartment 7. By subsequently closing the cover 2B, the battery 6 and adapter 8 can be protected from water, dust, and the like.

When removing the battery 6 from the battery compartment 7, the battery engaging parts 71B are disengaged from the battery engagement portions of the battery 6, allowing the battery 6 to be pulled out of the battery compartment 7 in the battery mounting direction A1.

If the operator wishes to operate the portable radio 1 on an external power supply, the operator opens the cover 2B and removes the adapter 8 in the adapter mounting direction A2. The operator then connects the free end of the cord 83 to the terminal of the adapter connector 21 and connects the adapter plug 82A to the external power supply. Power is thus supplied to the portable radio 1 through the adapter 8.

With the structure of the first embodiment described above, the cover 2B is lighter than the cover in the conventional apparatus since the adapter compartment 9 is provided in the device body 2A rather than the cover 2B. This arrangement facilitates opening and closing operations for the cover 2B. Further, since the device body 2A has the adapter compartment 9 and the battery compartment 7 that is disposed at a different position from the adapter compartment 9, the adapter 8 and the battery 6 can be simultaneously accommodated in the housing 2. Accordingly, the adapter 8 can be accommodated in the housing 2 while the speakers 23 are operated using the battery 6. Further, while the battery 6 is accommodated in the device body 2A, the cover 2B can be closed to protect the adapter 8 from water, dust, and the like.

Further, with the depicted structure, the adapter compartment 9 and battery compartment 7 are juxtaposed with each other so that: the adapter 8 does not interfere with the mounting and removal operations for the battery 6; and the battery 6 in turn does not interfere with the mounting and removal operations for the adapter 8. Hence, this structure facilitates the mounting and removal of the battery 6 and adapter 8.

Further, with the depicted structure, since the adapter compartment 9 is disposed at a position that does not obstruct the battery mounting path, the adapter 8 does not interfere with the battery 6 when the battery 6 is mounted and removed. Accordingly, the battery 6 can be easily mounted in and removed from the battery compartment 7.

Further, with the depicted structure, since the battery compartment 7 is disposed at a position that does not obstruct the adapter mounting path, the battery 6 does not interfere with the adapter 8 when the adapter 8 is mounted and removed. Accordingly, the adapter 8 can be easily mounted in and removed from the adapter compartment 9.

Further, with the depicted structure, the single adapter compartment 9 can accommodate a plurality of types of adapters.

With the depicted structure, since the adapter mounting direction A2 slopes relative to the cover 2B, the operator can easily mount and remove the adapter 8. Further, since there is no need for the housing to be open on both the top surface and side surface, as when the adapter mounting direction is orthogonal to the cover part, the cover 2B can be made more compact. Thus, the structure of the embodiment can facilitate the opening and closing operation of the cover 2B.

Further, since the adapter mounting direction A2 also slopes relative to the ground surface G, the operator can easily mount and remove the adapter 8 while the portable radio 1 is resting on the ground surface G. Further, since there is no need for the housing to be open on both the top surface and side surface, as when the adapter mounting direction is orthogonal to the ground surface, the cover 2B can be made more compact, thereby facilitating the opening and closing operations for the cover 2B.

When operating the portable radio 1, the top surface 81A, which is the side of the adapter 8 separated farthest from the cover 2B, is the most unstable side of the adapter 8. However, the top-surface restricting ribs 91 provided to contact the top surface 81A in the embodiment ensure that the adapter 8 is securely accommodated in the adapter compartment 9. Accordingly, this structure can prevent the adapter 8 from moving inside the portable radio 1 and causing damage to internal parts.

Further, since the top-surface restricting ribs 91, rear-surface restricting ribs 92, and restricting walls 93 all extend in the adapter mounting direction A2, the adapter 8 can be stably mounted and removed in the adapter mounting direction A2. Hence, this construction facilitates the mounting and removal of the adapter 8.

Further, with the depicted structure, since the battery mounting direction A1 is sloped relative to the cover 2B, the operator can easily mount and remove the battery 6. Further, since there is no need for the housing to be open on both the top surface and side surface, as when the battery mounting direction is orthogonal to the cover part, the cover 2B can be made more compact, thereby facilitating the opening and closing operations for the cover 2B.

Still further, since the battery mounting direction A1 is also sloped relative to the ground surface G, the operator can easily mount and remove the battery 6 while the portable radio 1 is resting on the ground surface G. Further, since there is no need for the housing to be open on both the top surface and side surface, as when the battery mounting direction is orthogonal to the ground surface, the cover 2B can be made more compact, thereby facilitating opening and closing operations for the cover 2B.

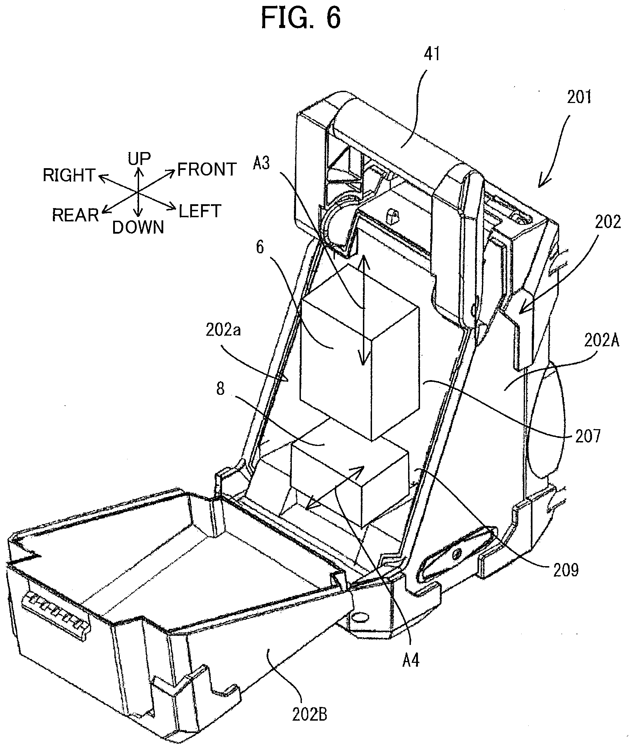

Next, a second embodiment of the present invention will be described with reference to Fig. 6, wherein like parts and components are designated with the same reference numerals as those of the first embodiment to avoid duplicating description.

Fig. 6 shows a portable radio 201 according to the second embodiment. The portable radio 201 includes a housing 202 constituting an outer shell of the portable radio 201. The housing 202 primarily includes a device body 202A having an opening 202a formed therein, and a cover 202B that can pivot relative to the device body 202A for opening and closing the opening 202a.

Provided in the device body 202A are a battery compartment 207 for accommodating the battery 6, and an adapter compartment 209 for accommodating the adapter 8. The battery compartment 207 is positioned above the adapter compartment 209 so that positions of the battery compartment 207 and adapter compartment 209 are substantially coincident with each other in a top view.

The battery 6 can be mounted and removed in a battery mounting direction A3. In the second embodiment, the battery mounting direction A3 is the vertical direction. The adapter 8 can be mounted and removed in an adapter mounting direction A4. In the second embodiment, the adapter mounting direction A4 is the front-rear direction.

Since the battery compartment 207 is positioned above the adapter compartment 209 in the structure of the second embodiment, the adapter 8 does not interfere with the mounting and removal of the battery 6. Accordingly, the battery 6 can be easily mounted in and removed from the battery compartment 207.

While the electric device of the invention has been described in detail with reference to specific embodiments thereof, it would be apparent to those skilled in the art that many modifications and variations may be made therein without departing from the spirit of the invention, the scope of which is defined by the attached claims.

In the embodiments described above, the adapter compartment 9 is capable of accommodating AC adapters including the Japanese adapter 8, the Australian adapter 108, the British adapter 208, and the European adapter 308, but the adapter compartment 9 of the embodiments may be capable of accommodating AC adapters from other countries as well.

In the embodiments described above, a portable radio is described as an example of the electric device, but the present invention is not limited to a portable radio. For example, the electric device may be a lantern, a light, a fan, a heater, or a speaker.

In the first embodiment, the battery compartment 7 and adapter compartment 9 are juxtaposed in the left-right direction. However, the battery compartment 7 and adapter compartment 9 may be juxtaposed in the front-rear direction instead, for example.

In the second embodiment, the adapter mounting direction A4 for the adapter 8 coincides with the front-rear direction, but the adapter mounting direction A4 may be set to the vertical direction instead. Alternatively, the adapter mounting direction A4 may be set to the left-right direction. In this case, the shapes of the housing 202 and cover 202B in areas that the two parts are joined together may be modified so that the adapter 8 does not interfere with the housing 202 in the left-right direction.

### [Reference Signs List]

- 1, 201: portable radio
- 2, 202: housing
- 3, 203: cover
- 4: frame guard
- 5: operating part
- 6: battery
- 7, 207: battery compartment
- 8: adapter
- 9, 209: adapter compartment
- 23: speaker
- 91: top-surface restricting rib
- 92: rear-surface restricting rib
- 93: restricting wall
- A1, A3: battery mounting direction
- A2, A4: adapter mounting direction

## Claims

1. An electric device (1) comprising:
a housing (2) including a device body (2A) and a cover (2B), the device body including an adapter compartment (9) and a battery compartment (7) disposed at a different position from the adapter compartment, the adapter compartment being configured to accommodate an adapter (8, 108, 208, 308) including a power supply connector (82) connectable to an external power supply, the battery compartment (7) being configured to accommodate a battery (6), the cover (2B) being configured to expose and close the adapter compartment (9) and the battery compartment (7);
an adapter connector (21) provided at the housing and connectable to the adapter (8, 108, 208, 308); and
an output portion (23) configured to be operated by accommodating the battery in the battery compartment or by connecting the adapter to the adapter connector and the external power supply, wherein:
the housing (2) has a general triangular shape in a side view;
a manipulation portion (5) is provided at a front surface of the housing (2) such that the manipulation portion (5) is sloped relative to a ground surface (G) in a state where the electric device is placed on the ground surface, the manipulation portion being configured to be manipulated to operate the output portion;
the adapter (8, 108, 208, 308) is configured to be mounted in and removed from the adapter compartment (9) in an adapter mounting direction (A2);
the adapter compartment (9) comprises a recessed part (95) that is recessed in the adapter mounting direction (A2) in which the adapter is mounted, the recessed part (95) being configured to accommodate the power supply connector (82) of the adapter (8, 108, 208, 308);
the battery (6) is configured to be mounted in and removed from the battery compartment (7) along a battery mounting path;
the adapter compartment (9) is disposed at a position that does not obstruct the battery mounting path; and
the adapter (8, 108, 208, 308) accommodated in the adapter compartment (9) and the adapter mounting direction (A2) are sloped relative to the ground surface (G) in the state where the electric device is placed on the ground surface.

2. The electric device according to claim 1, wherein the adapter compartment and the battery compartment are juxtaposed with each other.

3. The electric device according to claim 1, wherein the adapter compartment and the battery compartment are aligned vertically.

4. The electric device according to claim 3, wherein the battery compartment is disposed above the adapter compartment.

5. The electric device according to any one of claims 1 to 4,
wherein the battery compartment (7) is disposed at a position that does not obstruct the adapter mounting path.

6. The electric device according to any one of claims 1 to 5, wherein the adapter compartment (9) is configured to accommodate another adapter (108, 208, 308) whose type is different from a type of the adapter (8).

7. The electric device according to claim 1,
wherein the adapter mounting direction (A2) is sloped relative to the cover (2B) when the cover is closed.

8. The electric device according to claim 7, wherein the adapter compartment (9) comprises a restricting rib (91) configured to contact a side surface (81A) of the adapter (8, 108, 208, 308) to restrict movement of the adapter, the side surface being a surface separated farthest from an inner surface of the cover (2B).

9. The electric device according to claim 7, wherein the adapter compartment (9) comprises a restricting rib (91, 92, 93) extending in the adapter mounting direction (A2) and configured to guide mounting and removal of the adapter.

10. The electric device according to claim 1, wherein:
the battery (6) is configured to be mounted in and removed from the battery compartment (7) in a battery mounting direction (A1); and
the battery mounting direction (A1) is sloped relative to the cover (2B) when the cover is closed.

11. The electric device according to claim 1, wherein:
the battery (6) is configured to be mounted in and removed from the battery compartment (7) in a battery mounting direction; and
the battery mounting direction is sloped relative to a ground surface (G) in a state where the electric device is placed on the ground surface.

## Patentansprüche

1. Eine elektrische Vorrichtung (1), umfassend:
ein Gehäuse (2) mit einem Gerätekörper (2A) und einer Abdeckung (2B), wobei der Gerätekörper ein Adapterfach (9) und ein Batteriefach (7) aufweist, das an einer anderen Position als das Adapterfach angeordnet ist, wobei das Adapterfach ausgebildet ist, um einen Adapter (8, 108, 208, 308) mit einem Stromversorgungsstecker (82) aufzunehmen, der mit einer externen Stromversorgung verbindbar ist, wobei das Batteriefach (7) dazu ausgebildet ist, eine Batterie (6) aufzunehmen, wobei die Abdeckung (2B) dazu ausgebildet ist, das Adapterfach (9) und das Batteriefach (7) freizulegen und zu schließen;
einen Adapterstecker (21), der am Gehäuse vorgesehen und mit dem Adapter (8, 108, 208, 308) verbindbar ist; und
einen Ausgangsteil (23), das dazu ausgebildet ist, durch Unterbringen der Batterie in dem Batteriefach oder durch Verbinden des Adapters mit dem Adapterstecker und der externen Stromversorgung betrieben zu werden, wobei:
das Gehäuse (2) in einer Seitenansicht eine allgemeine dreieckige Form aufweist;
ein Betätigungsteil (5) an einer Stirnfläche des Gehäuses (2) derart vorgesehen ist, dass das Betätigungsteil (5) relativ zu einer Bodenfläche (G) in einem Zustand geneigt ist, in dem die elektrische Vorrichtung auf der Bodenfläche positioniert ist, wobei das Betätigungsteil dazu ausgebildet ist, zum Betreiben des Ausgangsteils betätigt zu werden;
der Adapter (8, 108, 208, 308) dazu ausgebildet ist, um in einer Montagerichtung (A2) des Adapters im Adapterfach (9) eingebaut und entfernt zu werden;
das Adapterfach (9) ein versenktes Element (95) aufweist, das in der Montagerichtung (A2) des Adapters, in der der Adapter eingebaut wird, versenkt ist, wobei das versenkte Element (95) dazu ausgebildet ist, den Stromversorgungsstecker (82) des Adapters (8, 108, 208, 308) aufzunehmen;
die Batterie (6) dazu ausgebildet ist, um entlang eines Batteriemontageweges in das Batteriefach (7) eingebaut und daraus entfernt zu werden;
das Adapterfach (9) in einer Position angeordnet ist, die den Batteriemontageweg nicht behindert; und
der Adapter (8, 108, 208, 308) in dem Adapterfach untergebracht ist (9) und die Montagerichtung (A2) des Adapters in dem Zustand in der die elektrische Vorrichtung auf die Bodenfläche positioniert wird, relativ zur Bodenfläche (G) schräg ist.

2. Elektrische Vorrichtung nach Anspruch 1, wobei das Adapterfach und das Batteriefach nebeneinander angeordnet sind.

3. Elektrische Vorrichtung nach Anspruch 1, wobei das Adapterfach und das Batteriefach vertikal ausgerichtet sind.

4. Elektrische Vorrichtung nach Anspruch 3, wobei das Batteriefach über dem Adapterfach angeordnet ist.

5. Elektrische Vorrichtung nach einem der Ansprüche 1 bis 4, wobei das Batteriefach (7) an einer Position angeordnet ist, die den Montageweg des Adapters nicht behindert.

6. Elektrische Vorrichtung nach einem der Ansprüche 1 bis 5, wobei das Adapterfach (9) dazu ausgebildet ist, einen anderen Adapter (108, 208, 308) aufzunehmen, dessen Typ sich von einem Typ des Adapters (8) unterscheidet.

7. Elektrische Vorrichtung nach Anspruch 1,
wobei die Montagerichtung (A2) des Adapters in Bezug auf die Abdeckung (2B) bei geschlossener Abdeckung schräg ist.

8. Elektrische Vorrichtung nach Anspruch 7, wobei das Adapterfach (9) eine Begrenzungsrippe (91) aufweist, die dazu ausgebildet ist, um mit einer Seitenfläche (81A) des Adapters (8, 108, 208, 308) in Kontakt zu treten, um die Bewegung des Adapters einzuschränken, wobei die Seitenfläche eine Fläche ist, die am weitesten von einer Innenfläche der Abdeckung (2B) entfernt liegt.

9. Elektrische Vorrichtung nach Anspruch 7, wobei das Adapterfach (9) eine Begrenzungsrippe (91, 92, 93) aufweist, die sich in der Montagerichtung (A2) des Adapters erstreckt und dazu ausgebildet ist, den Einbau und das Entfernen des Adapters zu führen.

10. Elektrische Vorrichtung nach Anspruch 1, wobei:
die Batterie (6) dazu ausgebildet ist, in einer Batteriemontagerichtung (A1) in das Batteriefach (7) eingebaut und daraus entfernt zu werden; und
die Batteriemontagerichtung (A1) bei geschlossener Abdeckung relativ zu der Abdeckung (2B) schräg ist.

11. Elektrische Vorrichtung nach Anspruch 1,wobei:
die Batterie (6) dazu ausgebildet ist, in einer Batteriemontagerichtung in das Batteriefach (7) eingebaut und daraus entfernt zu werden; und
die Richtung der Batteriemontage relativ zu einer Bodenfläche (G) in einem Zustand, in dem die elektrische Vorrichtung auf der Bodenfläche platziert ist, schräg ist.

## Revendications

1. Dispositif électrique (1) comprenant :
un boîtier (2) incluant un corps de dispositif (2A) et un couvercle (2B), le corps de dispositif incluant un compartiment d'adaptateur (9) et un compartiment de batterie (7) disposé à une position différente du compartiment d'adaptateur, le compartiment d'adaptateur étant configuré pour loger un adaptateur (8, 108, 208, 308) incluant un connecteur d'alimentation électrique (82) pouvant être connecté à une alimentation électrique externe, le compartiment de batterie (7) étant configuré pour loger une batterie (6), le couvercle (2B) étant configuré pour exposer et fermer le compartiment d'adaptateur (9) et le compartiment de batterie (7) ;
un connecteur d'adaptateur (21) prévu sur le boîtier et pouvant être connecté à l'adaptateur (8, 108, 208, 308) ; et
une partie de sortie (23) configurée pour être mise en fonctionnement en logeant la batterie dans le compartiment de batterie ou en connectant l'adaptateur au connecteur d'adaptateur et à l'alimentation électrique externe, dans lequel :
le boîtier (2) a une forme générale triangulaire dans une vue latérale ; une partie de manipulation (5) est prévue sur une surface avant du boîtier (2) de telle sorte que la partie de manipulation (5) est inclinée par rapport à une surface de sol (G) dans un état où le dispositif électrique est placé sur la surface de sol, la partie de manipulation étant configurée pour être manipulée pour faire fonctionner la partie de sortie ; l'adaptateur (8, 108, 208, 308) est configuré pour être monté dans le compartiment d'adaptateur (9) et retiré de celui-ci dans une direction de montage d'adaptateur (A2) ;
le compartiment d'adaptateur (9) comprend une partie renfoncée (95) qui est renfoncée dans la direction de montage d'adaptateur (A2) dans laquelle l'adaptateur est monté, la partie renfoncée (95) étant configurée pour loger le connecteur d'alimentation électrique (82) de l'adaptateur (8, 108, 208, 308) ;
la batterie (6) est configurée pour être montée dans le compartiment de batterie (7) et retirée de celui-ci le long d'un chemin de montage de batterie ;
le compartiment d'adaptateur (9) est disposé à une position qui n'obstrue pas le chemin de montage de batterie ; et
l'adaptateur (8, 108, 208, 308) logé dans le compartiment d'adaptateur (9) et la direction de montage d'adaptateur (A2) sont inclinés par rapport à la surface de sol (G) dans l'état où le dispositif électrique est placé sur la surface de sol.

2. Dispositif électrique selon la revendication 1, dans lequel le compartiment d'adaptateur et le compartiment de batterie sont juxtaposés l'un à l'autre.

3. Dispositif électrique selon la revendication 1, dans lequel le compartiment d'adaptateur et le compartiment de batterie sont alignés verticalement.

4. Dispositif électrique selon la revendication 3, dans lequel le compartiment de batterie est disposé au-dessus du compartiment d'adaptateur.

5. Dispositif électrique selon l'une quelconque des revendications 1 à 4, dans lequel le compartiment de batterie (7) est disposé à une position qui n'obstrue pas le chemin de montage d'adaptateur.

6. Dispositif électrique selon l'une quelconque des revendications 1 à 5, dans lequel le compartiment d'adaptateur (9) est configuré pour loger un autre adaptateur (108, 208, 308) dont le type est différent d'un type de l'adaptateur (8).

7. Dispositif électrique selon la revendication 1, dans lequel la direction de montage d'adaptateur (A2) est inclinée par rapport au couvercle (2B) lorsque le couvercle est fermé.

8. Dispositif électrique selon la revendication 7, dans lequel le compartiment d'adaptateur (9) comprend une nervure de restriction (91) configurée pour venir en contact avec une surface latérale (81A) de l'adaptateur (8, 108, 208, 308) pour restreindre le mouvement de l'adaptateur, la surface latérale étant une surface séparée la plus éloignée d'une surface intérieure du couvercle (2B).

9. Dispositif électrique selon la revendication 7, dans lequel le compartiment d'adaptateur (9) comprend une nervure de restriction (91, 92, 93) s'étendant dans la direction de montage d'adaptateur (A2) et configurée pour guider le montage et le retrait de l'adaptateur.

10. Dispositif électrique selon la revendication 1, dans lequel :
la batterie (6) est configurée pour être montée dans le compartiment de batterie (7) et retirée de celui-ci dans une direction de montage de batterie (A1) ; et
la direction de montage de batterie (A1) est inclinée par rapport au couvercle (2B) lorsque le couvercle est fermé.

11. Dispositif électrique selon la revendication 1, dans lequel :
la batterie (6) est configurée pour être montée dans le compartiment de batterie (7) et retirée de celui-ci dans une direction de montage de batterie ; et
la direction de montage de batterie est inclinée par rapport à une surface de sol (G) dans un état où le dispositif électrique est placé sur la surface de sol.
